# FASCICULE DE BREVET EUROPEEN

(11) **EP 1 234 734 B1**
(45) Date de publication et mention de la délivrance du brevet: **15.06.2005**
(21) Numéro de dépôt: 02356038.6
(22) Date de dépôt: 26.02.2002
(51) Int. Cl.: B60R 25/02

(54) **Dispositif de blocage de direction pour véhicule équipé d'une direction assistée électrique**
Lenkungsverriegelungsvorrichtung für ein mit einer elektrischen Servolenkung ausgerüstetes Fahrzeug
Steering locking device for a vehicle equipped with electrical power steering

(30) Priorité: 27.02.2001 FR 0102671
(43) Date de publication de la demande: 28.08.2002
(73) Titulaire: Société de Mécanique d'Irigny, 69540 Irigny (FR)
(72) Inventeur: Granger, Denis, 69390 Charly (FR)
(74) Mandataire: Bratel, Gérard

(56) Documents cités:
- EP-A- 0 630 800
- DE-A- 4 303 485
- DE-A- 19 601 827
- FR-A- 2 793 749

## Description

La présente invention concerne, d'une façon générale, les véhicules automobiles équipés d'une direction assistée de type électrique. Elle se rapporte, plus particulièrement, à un dispositif de blocage du système de direction d'un tel véhicule, lorsque celui-ci est inutilisé.

La plupart des véhicules automobiles sont équipés d'un dispositif de blocage de la direction, qui est mis en action lorsque le véhicule n'est pas utilisé, pour servir d'antivol en empêchant la conduite du véhicule.

Le blocage du système de direction d'un véhicule automobile, équipé d'un dispositif prévu à cet effet, s'effectue habituellement de façon manuelle par l'entraînement en rotation du volant par l'utilisateur, jusque dans une position angulaire d'enclenchement de ce dispositif de blocage, lequel réalise alors un verrouillage mécanique de la colonne de direction. Ainsi, l'opération de blocage de la direction nécessite de fournir un certain effort manuel, à un instant où, habituellement, la direction ne bénéficie plus d'aucune assistance. De plus, le blocage de la direction demandant une action volontaire de la part de l'utilisateur du véhicule, il existe toujours un risque d'oubli de blocage, au moment où l'utilisateur quitte son véhicule, avec pour conséquence un risque augmenté de vol du véhicule concerné.

Pour éviter ces inconvénients, le document DE-A-19601827 (qui correspond au préambule de la revendication 1) divulgue un dispositif de blocage qui, mettant à profit la spécificité d'un certain type de directions assistées, évite à l'utilisateur de fournir un effort manuel pour bloquer le système de direction, tout en évitant le risque d'un oubli de blocage, ce dispositif assurant une automatisation de la manoeuvre de blocage.

Plus particulièrement, ce document décrit un dispositif de blocage de direction, pour véhicule automobile équipé d'une direction assistée électrique, qui comprend, d'une part, un mécanisme de verrouillage agissant sur la colonne de direction, ou sur une autre partie du système de direction, et d'autre part, associés au moteur électrique d'assistance de la direction, des moyens de contrôle recevant des signaux issus d'au moins un détecteur d'évènement déclencheur et/ou d'états du véhicule, de manière à commander le moteur électrique d'assistance et à entraîner en rotation la colonne de direction, par l'action de ce moteur électrique, jusqu'à atteindre une position dans laquelle le mécanisme de verrouillage s'enclenche.

Ainsi, lorsque l'utilisateur quitte le véhicule, la direction assistée électrique est encore automatiquement commandée, pour faire tourner la colonne de direction jusqu'à atteindre une position de verrouillage de la direction par le mécanisme de verrouillage.

Un tel dispositif procure les résultats et avantages suivants :
- En premier lieu, elle offre à l'utilisateur la possibilité de ne plus avoir à fournir d'effort manuel pour bloquer le système de direction, puisque l'assistance électrique de cette direction est mise à profit pour faire tourner la colonne de direction jusqu'à la position de verrouillage, de sorte que le « confort » est augmenté. A cet égard, on notera que l'intervention d'une direction assistée électrique pour une telle fonction ne pose aucun problème, même lorsque le moteur thermique du véhicule est à l'arrêt (tel ne serait pas le cas pour une direction assistée hydraulique, qui nécessiterait le fonctionnement d'une pompe entraînée par le moteur thermique).
- L'automaticité du dispositif proposé, doté d'une « intelligence », rend impossible tout oubli de blocage de la direction, de la part de l'utilisateur du véhicule, ce qui augmente la sécurité en réduisant les risques de vol du véhicule.
- Le système possède une structure simple et économique. D'une part, il peut utiliser des capteurs et détecteurs, et un calculateur, déjà existants sur le véhicule. D'autre part, il ne nécessite aucune transformation de la direction du véhicule, et il utilise le mécanisme classique de verrouillage de la colonne de direction, ou d'une autre partie du système de direction, ce mécanisme ne nécessitant pas d'être modifié ou adapté.

Le détecteur d'événement déclencheur est, par exemple, un détecteur de passage des portières du véhicule d'un état déverrouillé à un état verrouillé. La détection d'événement déclencheur est, de préférence, combinée à une détection d'états du véhicule, tels qu'une vitesse nulle du véhicule et/ou une absence de la clé de contact sur la serrure de contact, d'autres états significatifs pouvant aussi être ici envisagés. Dans tous les cas, les détecteurs d'événement déclencheur et d'états génèrent des signaux de type électrique, qui sont transmis aux moyens de contrôle où ils sont traités et combinés, pour commander la mise en rotation de la colonne de direction par le moteur électrique d'assistance, en alimentant électriquement ce moteur avec une puissance suffisante pour orienter les roues directrices alors que le véhicule n'avance pas.

La présente invention vise à perfectionner un dispositif de blocage de direction du type précédemment indiqué.

Selon l'invention, dans un dispositif de ce type, les moyens de contrôle précités reçoivent aussi un signal issu d'un capteur de couple moteur, placé sur le moteur électrique d'assistance et/ou sur la colonne de direction ou une autre partie de la direction, et ces moyens de contrôle sont prévus pour comparer ledit signal à une valeur de seuil prédéterminée correspondant à une position de blocage de la colonne de direction par le mécanisme de verrouillage, et pour arrêter, ou ne pas provoquer, la commande du moteur électrique d'assistance lorsque le couple mesuré dépasse la valeur de seuil. Le capteur de couple peut être associé à une barre de torsion existante sur la colonne de direction.

Ces dispositions avantageuses permettent d'arrêter automatiquement, et de façon simple, la commande du moteur électrique d'assistance, dès que le système de direction parvient dans une position de blocage par le mécanisme de verrouillage, et sans qu'il soit nécessaire de contrôler directement l'état de ce mécanisme de verrouillage. Bien entendu, si au moment de l'intervention du dispositif la colonne de direction se trouve déjà en position de blocage, le capteur de couple fournit une information évitant une mise en service inutile de ce dispositif.

La mise en oeuvre d'un capteur de couple offre ici des possibilités complémentaires, en particulier pour prendre en considération l'éventualité de la butée d'une roue directrice du véhicule contre un obstacle physique, par exemple une bordure de trottoir, au cours du processus automatique de blocage de la direction par le dispositif de l'invention. A cet effet, dans un mode de réalisation particulier, le dispositif comprend, outre un capteur du couple s'exerçant sur la colonne de direction, des moyens de détection de la montée en couple du moteur électrique d'assistance, et des moyens de traitement prévus pour analyser si la montée en couple de ce moteur est simultanée à la montée en couple du capteur de couple résistant, le moteur électrique d'assistance étant piloté de telle sorte qu'en cas de non-simultanéité de la montée des deux couples, significative de la butée d'une roue directrice du véhicule contre un obstacle, le moteur est commandé dans l'autre sens de rotation jusqu'à atteindre une position de verrouillage de la direction.

Dans une variante, mettant à profit un capteur de position absolue de la direction, le dispositif comprend comme précédemment des moyens de détection de la montée en couple du moteur électrique d'assistance, et des moyens de traitement prévus pour analyser si la montée en couple de ce moteur est simultanée à l'atteinte d'une position de blocage de la direction, constatée par détection de la position de la direction au moyen du capteur de position absolue, le moteur électrique d'assistance étant piloté de telle sorte qu'en cas de non-simultanéité de la montée en couple avec l'atteinte d'une position de blocage de la direction, significative de la butée d'une roue directrice du véhicule contre un obstacle, le moteur est commandé dans l'autre sens de rotation jusqu'à atteindre une position de verrouillage de la direction.

Ainsi, lorsque la roue bute contre un obstacle tel qu'une bordure de trottoir, avant que soit atteinte une position de verrouillage de la direction, le moteur électrique d'assistance commande automatiquement la rotation de la colonne de direction dans le sens opposé au mouvement initialement engagé, pour tenter d'atteindre une autre position angulaire permettant le verrouillage. Cette disposition complémentaire confère, à la manoeuvre automatique de la direction en vue de son blocage, une quasi-certitude de succès.

Néanmoins, on ne peut entièrement exclure l'éventualité de la nouvelle rencontre d'un obstacle par l'une des roues directrices du véhicule, après enclenchement du second sens de rotation de la colonne de direction. Pour prendre en compte cette dernière éventualité, les moyens de commande sont avantageusement prévus pour arrêter le moteur électrique d'assistance, donc pour interrompre la manoeuvre automatique de la direction, en cas de nouvelle détection d'une montée en couple du moteur électrique d'assistance non simultanée à la montée en couple du capteur de couple résistant, ou en cas de non-simultanéité de cette montée en couple avec l'atteinte d'une position de blocage de la direction, après inversion du sens de rotation de ce moteur.

Dans la forme de réalisation plus simple du dispositif de blocage de direction, objet de l'invention, ce dispositif « ignore », au moment de chaque mise en service, quelle est la position angulaire de blocage angulairement la plus proche de la position initiale de la colonne de direction, et le moteur électrique d'assistance est mis en marche dans un sens de rotation arbitraire, qui ne correspond pas nécessairement au déplacement angulaire le plus court pour atteindre l'une des positions de blocage, définies par le mécanisme de verrouillage. Ce mode de fonctionnement peut conduire à une consommation électrique excessive et inutile, et à une usure des pneumatiques des roues directrices du véhicule concerné.

Pour éviter ces inconvénients, dans le cas d'un véhicule automobile équipé d'un capteur de position angulaire absolue de la colonne de direction, les moyens de contrôle appartenant au dispositif de l'invention peuvent être prévus pour comparer la position angulaire initiale de la colonne de direction, c'est-à-dire sa position à l'instant de la détection de l'événement déclencheur, avec des positions angulaires préétablies de blocage de la colonne de direction par le mécanisme de verrouillage, et pour commander la mise en rotation du moteur électrique d'assistance dans un sens correspondant au déplacement angulaire le plus court entre la position initiale et une position de blocage. Autrement dit, en exploitant l'information fournie par un capteur d'angle absolu, c'est-à-dire un capteur donnant une position angulaire par référence à une valeur "zéro", le dispositif permet d'amener automatiquement la colonne de direction vers la position de blocage la plus proche, à partir de la position de cette colonne à l'instant où le véhicule est quitté par son utilisateur, en limitant ainsi l'usure des pneumatiques du véhicule et aussi la consommation électrique liée au fonctionnement du dispositif.

Enfin, dans la version de base du dispositif de blocage de direction objet de l'invention, celui-ci ne fait que manoeuvrer la colonne de direction vers la position de blocage ; il ne réalise pas la manoeuvre inverse, de sorte que, lorsque l'utilisateur du véhicule souhaite repartir, il ne retrouve pas les roues directrices dans la position occupée par celles-ci au moment où le véhicule avait été abandonné. Cependant, dans une forme de réalisation plus perfectionnée du dispositif de blocage de direction objet de l'invention, les moyens de commande sont prévus pour mémoriser la position angulaire initiale de la colonne de direction, c'est-à-dire sa position à l'instant de la détection de l'événement déclencheur, position qui est fournie par un capteur d'angle absolu ou relatif, avant le début de la manoeuvre de la colonne de direction par le moteur électrique d'assistance vers la position de blocage, et pour commander à nouveau le moteur électrique d'assistance, après neutralisation du mécanisme de verrouillage, de manière à manoeuvrer la colonne de direction dans le sens inverse, et ainsi ramener cette colonne de direction dans la position angulaire initiale. Ainsi, après déblocage de la direction, les roues directrices du véhicule sont automatiquement remises dans leur position initiale, mémorisée, ce qui peut éviter au conducteur d'être surpris au redémarrage du véhicule.

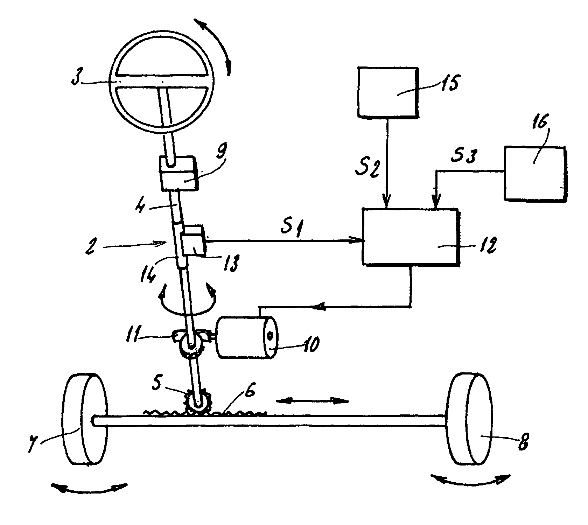

L'invention sera mieux comprise à l'aide de la description qui suit, en référence au dessin schématique annexé représentant, à titre d'exemple, une forme de réalisation de ce dispositif de blocage de direction pour véhicule équipé d'une direction assistée électrique.

L'unique figure du dessin représente, très schématiquement, un exemple de direction assistée électrique de véhicule automobile, avec dispositif de blocage conforme à la présente invention.

La figure montre les éléments habituels d'une direction 2 de véhicule automobile, à savoir un volant de conduite 3 lié à une colonne de direction 4, dont l'extrémité éloignée du volant 3 porte un pignon 5 venant en prise avec une crémaillère 6, les deux extrémités de la crémaillère 6 étant respectivement liées, par l'intermédiaire de biellettes, aux deux roues directrices 7 et 8 du véhicule concerné.

La direction 2 comporte un mécanisme de verrouillage 9, à fonction d'antivol, qui est disposé sur la colonne de direction 4, par exemple sous le volant 3. Il peut s'agir, notamment mais non obligatoirement, d'un mécanisme de verrouillage 9 qui est neutralisé par l'introduction d'une clé de contact dans une serrure de contact, et qui est activé lorsque la clé de contact est retirée de sa serrure, ou par un autre système analogue à commande électrique. Dans tous les cas, le mécanisme de verrouillage 9 assure le blocage en rotation de la colonne de direction 4 dans au moins une position angulaire prédéterminée.

S'agissant ici d'une direction assistée électrique, il est prévu un moteur électrique d'assistance 10, à deux sens de rotation, dont l'arbre de sortie est accouplé à la colonne de direction 4, par l'intermédiaire d'une transmission mécanique 11, de manière à lui transmettre un couple moteur.

Le moteur électrique d'assistance 10 est piloté par un calculateur électronique 12 ; ce dernier reçoit, entre autres, un signal électrique S1 issu d'un capteur 13 de couple résistant, placé sur la colonne de direction 4 et notamment associé à une barre de torsion 14, insérée dans la colonne de direction 4 entre le mécanisme de verrouillage 9 et le point d'attaque de la transmission mécanique 11 (non nécessairement situé à l'endroit illustré au dessin).

Le calculateur électronique 12 reçoit aussi un signal électrique S2 issu d'un détecteur 15 d'événement déclencheur, tel qu'un détecteur de passage des portières du véhicule d'un état déverrouillé à un état verrouillé, indiquant que le véhicule vient d'être quitté par son conducteur ou ses occupants. Le même calculateur électronique 12 reçoit encore un signal électrique S3 issu d'au moins un détecteur 16 d'états, tels qu'une vitesse nulle du véhicule et/ou une absence de la clé de contact sur la serrure de contact, ou autre système équivalent, ces états autorisant l'intervention du dispositif à l'instant d'une détection d'événement déclencheur.

Le calculateur 12, recevant et traitant les signaux électriques S2 et S3 issus des détecteurs 15, 16 d'événement déclencheur et d'états, va générer, lorsque ces signaux indiquent que le véhicule est quitté, une commande du moteur électrique d'assistance 10 jusqu'au blocage de la direction 2 par le mécanisme de verrouillage 9, ceci selon une procédure entièrement automatique.

Plus particulièrement, dès que se produit l'événement déclencheur, et à condition que les autres états détectés soient présents, le moteur électrique d'assistance 10 est alimenté pour tourner dans un sens de rotation déterminé, et avec une puissance suffisante pour entraîner en rotation la colonne de direction 4 et faire pivoter les deux roues directrices 7 et 8. La rotation de la colonne de direction 4 s'arrêtera, dès que le couple moteur, nécessaire à cette rotation, dépasse une valeur de seuil correspondant à la mise en butée du mécanisme de verrouillage 9, cette valeur de seuil du couple étant définie au préalable lors de la conception du système de direction. L'information relative au couple instantané provient du capteur de couple 13, sous la forme du signal S1 amené au calculateur 12, qui en effectue le traitement.

Si, au moment où le véhicule est quitté, la colonne de direction 4 se trouve déjà dans une position angulaire de blocage par le mécanisme de verrouillage 9, l'information fournie par le capteur de couple 13 permettra à la rotation de la colonne de direction 4 de ne pas être commandée inutilement.

De plus, le calculateur 12 analyse la montée en couple du moteur électrique d'assistance 10, mesurée par la chute de vitesse de ce moteur 10, en la comparant à la montée en couple du capteur de couple 13. Si les deux montées en couple sont simultanées, il est admis que le premier « obstacle » rencontré est la butée du mécanisme de verrouillage 9, donc que la colonne de direction 4 est bien parvenue dans une position de blocage par ce mécanisme, et le moteur électrique d'assistance 10 est alors automatiquement arrêté. Par contre, une non-simultanéité des deux montées en couple, ici comparées, indique qu'une roue directrice 7 ou 8 a buté contre un obstacle, tel qu'une bordure de trottoir, au cours de son pivotement et avant même que n'ait pu être atteinte une position angulaire de blocage de la colonne de direction 4. Le calculateur 12 pilote alors le moteur électrique d'assistance 10 dans le sens opposé de rotation, pour éloigner la roue 7 ou 8 de l'obstacle rencontré, et amener la colonne de direction 4 vers une autre position de blocage qui devrait être atteinte sans rencontrer un autre obstacle.

Dans une variante, où le moyen à l'origine du signal S1 serait un capteur de position ou de déplacement, donnant la position instantanée de la direction 2, si la montée significative en couple du moteur électrique d'assistance 10, mesurée par exemple par la chute de sa vitesse ou par la chute de la tension aux bornes de ce moteur, n'est pas simultanée à l'atteinte d'une position de blocage de la direction 2, ceci indique qu'une roue directrice 7 ou 8 a buté contre un obstacle tel qu'une bordure de trottoir, avant même que n'ait pu être atteinte la position de blocage de la direction. Le calculateur 12 pilote alors le moteur électrique d'assistance 10 dans le sens opposé de rotation, pour éloigner la roue 7 ou 8 de l'obstacle rencontré, et amener la direction 2 vers une autre position de blocage qui devrait être atteinte sans rencontrer d'obstacle.

Le dispositif de blocage de direction, précédemment décrit, est applicable à tout véhicule automobile équipé d'une direction assistée électrique, d'un mécanisme de verrouillage de la colonne de direction (ou un système de verrouillage agissant sur une autre partie du système de direction), et d'un système de verrouillage/déverrouillage automatique des portières.

L'on ne s'éloignerait pas du cadre de la présente invention, telle que définie dans les revendications annexées :
- en utilisant tout moyen de mesure du couple, non nécessairement un capteur de couple associé à une barre de torsion ;
- en contrôlant le fonctionnement du dispositif à l'aide d'un capteur de position de la direction, par exemple un capteur de position angulaire, en complément du capteur de couple ;
- en détectant et prenant en compte, pour autoriser le fonctionnement du dispositif, des états du véhicule autres que ceux envisagés plus haut ;
- en assignant au calculateur d'autres fonctions complémentaires, pour un fonctionnement plus affiné du dispositif ;
- en appliquant le dispositif à des véhicules dont le mécanisme de verrouillage n'est pas nécessairement neutralisé ou activé par une clé de contact, mais peut aussi l'être par tout autre moyen, tel qu'une carte codée à introduire ou à retirer ;
- en destinant le dispositif à une direction dans laquelle le mécanisme de verrouillage occupe une position quelconque sur le système de direction, non nécessairement sur la colonne de direction, ce mécanisme de verrouillage pouvant même être placé sur le moteur d'assistance ;
- en appliquant le dispositif à des directions assistées électriques de toutes conceptions, quel que soit notamment le point d'action du moteur électrique d'assistance sur le système de direction, ce point pouvant être situé sur la colonne de direction, sur le pignon ou sur la crémailère.

## Revendications

1. Dispositif de blocage de direction pour véhicule automobile équipé d'une direction assistée électrique, le dispositif assurant une automatisation de la manoeuvre de blocage en évitant à l'utilisateur de fournir un effort manuel, ce dispositif comprenant, d'une part, un mécanisme de verrouillage (9) agissant sur la colonne de direction (4), ou sur une autre partie du système de direction (2), et d'autre part, associés au moteur électrique d'assistance (10) de la direction (2), des moyens de contrôle (12) recevant des signaux (S2, S3) issus d'au moins un détecteur (15, 16) d'événement déclencheur et/ou d'états du véhicule, de manière à commander le moteur électrique d'assistance (10) et à entraîner en rotation la colonne de direction (4), par l'action de ce moteur électrique (10), jusqu'à atteindre une position dans laquelle le mécanisme de verrouillage (9) s'enclenche, **caractérisé en ce que** les moyens de contrôle (12) reçoivent aussi un signal (S1) issu d'un capteur de couple moteur (13), placé sur le moteur électrique d'assistance (10) et/ou sur la colonne de direction (4), et **en ce que** ces moyens de contrôle (12) sont prévus pour comparer ledit signal (S1) à une valeur de seuil prédéterminée correspondant à une position de blocage de la colonne de direction (4) par le mécanisme de verrouillage (9), et pour arrêter, ou ne pas provoquer, la commande de moteur électrique d'assistance (10) lorsque le couple mesuré dépasse la valeur de seuil.

2. Dispositif de blocage de direction selon la revendication 1, **caractérisé en ce que** le détecteur d'événement déclencheur est un détecteur (15) de passage des portières du véhicule d'un état déverrouillé à un état verrouillé.

3. Dispositif de blocage de direction selon la revendication 1 ou 2, **caractérisé en ce que** le détecteur d'états du véhicule est un détecteur (16) de vitesse nulle du véhicule et/ou d'absence de clé de contact sur la serrure de contact.

4. Dispositif de blocage de direction selon l'une quelconque des revendications 1 à 3, **caractérisé en ce que** le capteur de couple (03) est associé à une barre de torsion (14) existante sur la colonne de direction (4).

5. Dispositif de blocage de direction selon l'une quelconque des revendications 1 à 4, **caractérisé en ce qu'**il comprend, outre un capteur (13) du couple s'exerçant sur la colonne de direction (4), des moyens de détection de la montée en couple du moteur électrique d'assistance (10), et des moyens de traitement prévus pour analyser si la montée en couple de ce moteur (10) est simultanée à la montée en couple du capteur de couple (13) résistant, le moteur électrique d'assistance (10) étant piloté de telle sorte qu'en cas de non-simultanéité de la montée des deux couples, significative de la butée d'une roue directrice (7,8) du véhicule contre un obstacle, le moteur (10) est commandé dans l'autre sens de rotation jusqu'à atteindre une position de verrouillage de la direction (2).

6. Dispositif de blocage de direction selon l'une quelconque des revendications 1 à 5, **caractérisé en ce qu'**il comprend des moyens de détection de la montée en couple du moteur électrique d'assistance (10), et des moyens de traitement (12) prévus pour analyser si la montée en couple de ce moteur (10) est simultanée à l'atteinte d'une position de blocage de la direction (2), constatée par détection de la position de la direction (2) au moyen d'un capteur de position absolue, le moteur électrique d'assistance (10) étant piloté de telle sorte qu'en cas de non-simultanéité de la montée en couple avec l'atteinte d'une position de blocage de la direction (2), significative de la butée d'une roue directrice (7, 8) du véhicule contre un obstacle, le moteur (10) est commandé dans l'autre sens de rotation jusqu'à atteindre une position de verrouillage de la direction (2).

7. Dispositif de blocage de direction selon la revendication 5 ou 6, **caractérisé en ce que** les moyens de commande (12) sont prévus pour arrêter le moteur électrique d'assistance (10), donc pour interrompre la manoeuvre automatique de la direction (2), en cas de nouvelle détection d'une montée en couple du moteur électrique d'assistance (10) non simultanée à la montée en couple du capteur (13) de couple, ou en cas de non-simultanéité de cette montée en couple avec atteinte d'une position de blocage de la direction, après inversion du sens de rotation de ce moteur (10).

8. Dispositif de blocage de direction selon l'une quelconque des revendications 1 à 7, pour véhicule automobile équipé d'un capteur de position angulaire absolue de la colonne de direction (4), **caractérisé en ce que** les moyens de contrôle (12) sont prévus pour comparer la position angulaire initiale de la colonne de direction (4), c'est-à-dire sa position à l'instant de la détection de l'événement déclencheur, avec des positions angulaires de blocage préétablies de la colonne de direction (4) par le mécanisme de verrouillage (9), et pour commander la mise en rotation du moteur électrique d'assistance (10) dans un sens correspondant au déplacement angulaire le plus court entre la position initiale et une position de blocage.

9. Dispositif de blocage de direction selon l'une quelconque des revendications 1 à 8, **caractérisé en ce que** les moyens de commande (12) sont prévus pour mémoriser la position angulaire initiale de la colonne de direction (4), c'est-à-dire la position à l'instant de la détection de l'événement déclencheur, position qui est fournie par un capteur d'angle absolu ou relatif, avant le début de la manoeuvre de la colonne de direction (4) par le moteur électrique d'assistance (10) vers la position de blocage, et pour commander à nouveau le moteur électrique d'assistance (10), après neutralisation du mécanisme de verrouillage (9), de manière à manoeuvrer la colonne de direction (4) dans le sens inverse, et ainsi ramener cette colonne de direction (4) dans la position angulaire initiale.

10. Dispositif de blocage de direction selon l'une quelconque des revendications 1 à 9, **caractérisé en ce que** les moyens de contrôle, intervenant pour commander le moteur électrique d'assistance (10) en recevant et en traitant les signaux (S1, S2, S3) des détecteurs d'événement déclencheur et d'états du véhicule, et du capteur de couple (13), sont constitués par un calculateur électronique (12).

## Patentansprüche

1. Lenkungsblockiervorrichtung für ein Kraftfahrzeug, das mit einer elektrischen Servolenkung ausgestattet ist, wobei die Vorrichtung eine Automatisierung des Blockiervorgangs sicherstellt, indem sie es dem Benutzer erspart, einen manuellen Kraftaufwand bereitstellen zu müssen, wobei die Vorrichtung einerseits eine auf die Lenksäule (4) oder ein anderes Teil des Lenkungssystems (2) wirkende Verriegelungseinrichtung (9) und andererseits mit dem elektrischen Hilfsmotor (10) der Lenkung (2) verbundene Steuereinrichtungen (12) umfasst, die Signale (S2, S3) empfangen, die von mindestens einem Detektor (15, 16) für Auslöseereignisse und/oder Fahrzeugzustände abgegeben werden, um den elektrischen Hilfsmotor (10) anzusteuern und die Lenksäule (4) durch die Wirkung dieses Elektromotors (10) in Drehung zu versetzen, bis sie eine Position erreicht, in der die Verriegelungseinrichtung (9) einrastet, **dadurch gekennzeichnet, dass** die Steuereinrichtungen (12) auch ein Signal (S1) empfangen, das von einem Motordrehmomentsensor (13) abgegeben wird, der sich am elektrischen Hilfsmotor (10) und/oder an der Lenksäule (4) befindet, und dass die Steuereinrichtungen (12) dazu vorgesehen sind, das Signal (S1) mit einem vorbestimmten Schwellenwert zu vergleichen, der einer Stellung der Blockierung der Lenksäule (4) durch die Verriegelungseinrichtung (9) entspricht, und um die Steuerung des elektrischen Hilfsmotors (10) anzuhalten oder nicht hervorzurufen, wenn das gemessene Moment den Schwellenwert überschreitet.

2. Lenkungsblockiervorrichtung nach Anspruch 1, **dadurch gekennzeichnet, dass** der Detektor für Auslöseereignisse ein Detektor (15) für den Übergang der Fahrzeugtüren von einem unverriegelten zu einem verriegelten Zustand ist.

3. Lenkungsblockiervorrichtung nach Anspruch 1 oder 2, **dadurch gekennzeichnet, dass** der Detektor für die Fahrzeugzustände ein Detektor (16) für Nullgeschwindigkeit des Fahrzeugs und/oder die Abwesenheit eines Zündschlüssels im Zündschloss ist.

4. Lenkungsblockiervorrichtung nach einem der Ansprüche 1 bis 3, dadurch gekenn zeichnet, dass der Drehmomentsensor (13) mit einem an der Lenksäule (4) vorhandenen Torsionsstab (14) verbunden ist.

5. Lenkungsblockiervorrichtung nach einem der Ansprüche 1 bis 4, **dadurch gekennzeichnet, dass** sie außer einem Sensor (13) für das auf die Lenksäule (4) wirkende Drehmoment, Erfassungseinrichtungen für den Drehmomentanstieg des elektrischen Hilfsmotors (10) und Verarbeitungseinrichtungen umfasst, die dazu vorgesehen sind, zu analysieren, ob der Drehmomentanstieg dieses Motors (10) gleichzeitig mit einem Widerstandsdrehmomentanstieg des Drehmomentsensors (13) stattfindet, wobei der elektrische Hilfsmotor (10) derart angesteuert wird, dass im Falle von Nichtgleichzeitigkeit des Anstiegs der beiden Drehmomente, was das Anschlagen eines Leitrades (7, 8) des Fahrzeugs an einem Hindernis anzeigt, der Motor (10) in der anderen Drehrichtung angesteuert wird, bis eine Verriegelungsposition der Lenkung (2) erreicht ist.

6. Lenkungsblockiervorrichtung nach einem der Ansprüche 1 bis 5, **dadurch gekennzeichnet, dass** sie Erfassungseinrichtungen für den Drehmomentanstieg des elektrischen Hilfsmotors (10) und Verarbeitungseinrichtungen (12) umfasst, die dazu vorgesehen sind, zu analysieren, ob der Drehmomentanstieg dieses Motors (10) gleichzeitig mit dem Erreichen einer Blockierposition der Lenkung (2) stattfindet, die durch Erfassen der Position der Lenkung (2) mittels eines Absolutpositionssensors festgestellt wird, wobei der elektrische Hilfsmotor (10) derart angesteuert wird, dass im Falle von Nichtgleichzeitigkeit des Anstiegs des Drehmoments mit dem Erreichen einer Blockierposition der Lenkung (2), was das Anschlagen eines Leitrades (7, 8) des Fahrzeugs an einem Hindernis anzeigt, der Motor (10) in der anderen Drehrichtung angesteuert wird, bis eine Verriegelungsposition der Lenkung (2) erreicht ist.

7. Lenkungsblockiervorrichtung nach Anspruch 5 oder 6, **dadurch gekennzeichnet, dass** die Steuereinrichtungen (12) dazu vorgesehen sind, im Falle einer Neuerfassung eines zum Drehmomentanstieg des Drehmomentsensors (13) nicht gleichzeitigen Drehmomentanstiegs des elektrischen Hilfsmotors (10) oder im Falle einer Nichtgleichzeitigkeit dieses Drehmomentanstiegs mit dem Erreichen einer Blockierposition der Lenkung nach Umkehr der Drehrichtung dieses Motors (10) den elektrischen Hilfsmotor (10) anzuhalten, also die automatische Betätigung der Lenkung (2) zu unterbrechen.

8. Lenkungsblockiervorrichtung nach einem der Ansprüche 1 bis 7, für ein Kraftfahrzeug, das mit einem Sensor für die Absolutwinkelposition der Lenksäule (4) ausgestattet ist, **dadurch gekennzeichnet, dass** die Steuereinrichtungen (12) dazu vorgesehen sind, die Ausgangswinkelposition der Lenksäule (4), d.h. ihre Position im Augenblick der Erfassung des Auslöseereignisses, mit vorher festgelegten Winkelpositionen der Blockierung der Lenksäule (4) durch die Verriegelungseinrichtung (9) zu vergleichen, und um den elektrischen Hilfsmotor (10) in einer Richtung in Drehung zu versetzen, die der kürzesten Winkelverschiebung zwischen der Ausgangsposition und einer Blockierposition entspricht.

9. Lenkungsblockiervorrichtung nach einem der Ansprüche 1 bis 8, **dadurch gekennzeichnet, dass** die Steuereinrichtungen (12) dazu vorgesehen sind, die Ausgangswinkelposition der Lenksäule (4) zu speichern, d.h. die Position im Augenblick der Erfassung des Auslöseereignisses, die von einem Absolut- oder Relativwinkelsensor vor dem Beginn der Betätigung der Lenksäule (4) durch den elektrischen Hilfsmotor (10) zur Blockierposition geliefert wird, und um den elektrischen Hilfsmotor (10) nach dem Unwirksammachen der Verriegelungseinrichtung (9) erneut anzusteuern, um die Lenksäule (4) in der umgekehrten Richtung zu betätigen und somit diese Lenksäule (4) in die Ausgangswinkelposition zurückzubringen.

10. Lenkungsblockiervorrichtung nach einem der Ansprüche 1 bis 9, **dadurch gekennzeichnet, dass** die Steuereinrichtungen, die eingreifen, um den elektrischen Hilfsmotor (10) anzusteuern, indem sie die Signale (S1, S2, S3) der Detektoren für Auslöseereignisse und Fahrzeugzustände und des Drehmomentsensors (13) empfangen und verarbeiten, aus einem elektronischen Rechner (12) bestehen.

## Claims

1. Steering lock device for motor vehicle fitted with electric assisted steering, the device automating the locking operation while sparing the user from providing a manual effort, this device comprising, on the one hand, a locking mechanism (9) acting on the steering column (4), or on another part of the steering system (2), and, on the other hand, associated with the electric motor (10) assisting the steering (2), control means (12) receiving signals (S2, S3) originating from at least one detector (15, 16) of trigger events and/or of states of the vehicle, in order to operate the electric assistance motor (10) and to rotate the steering column (4), by the action of this electric motor (10) until it reaches a position in which the locking mechanism (9) engages, **characterized in that** the control means (12) also receive a signal (S1) originating from a motor torque sensor (13), placed on the electric assistance motor (10) and/or on the steering column (4), and **in that** these control means (12) are provided to compare the said signal (S1) with a predetermined threshold value corresponding to a position of locking of the steering column (4) by the locking mechanism (9) and to stop, or not to provoke, the operation of the electric assistance motor (10) when the measured torque exceeds the threshold value.

2. Steering lock device according to Claim 1, **characterized in that** the trigger event detector is a detector (15) of transition of the vehicle doors from an unlocked state to a locked state.

3. Steering lock device according to Claim 1 or 2, **characterized in that** the detector of vehicle states is a detector (16) of zero speed of the vehicle and/or of absence of the ignition key in the ignition lock.

4. Steering lock device according to any one of Claims 1 to 3, **characterized in that** the torque sensor (13) is associated with a torsion bar (14) existing on the steering column (4).

5. Steering lock device according to any one of Claims 1 to 4, **characterized in that** it comprises; in addition to a sensor (13) of the torque exerted on the steering column (4), means of detecting the torque wind-up of the electric assistance motor (10) and processing means provided to analyse whether the torque wind-up of this motor (10) is simultaneous with the torque wind-up of the resistant torque sensor (13), the electric assistance motor (10) being driven such that, in the case of non-simultaneity of the wind-up of the two torques, indicating the abutment of a steered wheel (7, 8) of the vehicle against an obstacle, the motor (10) is operated in the other direction of rotation.until reaching a position of locking of the steering (2).

6. Steering lock device according to any one of Claims 1 to 5, **characterized in that** it comprises means of detecting the torque wind-up of the electric assistance motor (10), and processing means (12) provided to analyse whether the torque wind-up of this motor (10) is simultaneous with the reaching of a locked position of the steering (2), ascertained by detection of the position of the steering (2) by means of an absolute position sensor, the electric assistance motor (10) being driven such that in the event of non-simultaneity of the torque wind-up with the reaching of a locked position of the steering (2), signifying the abutment of a steered wheel (7, 8) of the vehicle against an obstacle, the motor (10) is operated in the other direction of rotation until reaching a position of locking of the steering (2).

7. , Steering lock device according to Claim 5 or 6, **characterized in that** the control means (12) are provided to stop the electric assistance motor (10), hence to interrupt the automatic operation of the steering (2), in the event of a new detection of a torque wind-up of the electric assistance motor (10) not simultaneous with the torque wind-up of the torque sensor (13) or in the event of non-simultaneity of this torque wind-up with the reaching of a locked position of the steering, after the direction of rotation of this motor (10) is inverted.

8. Steering lock device according to any one of Claims 1 to 7, for motor vehicle fitted with a sensor of absolute angular position of the steering column (4), **characterized in that** the control means (12) are provided to compare the initial angular position of the steering column (4), that is to say its position at the instant of detection of the trigger event, with preestablished angular positions of locking of the steering column (4) by the locking mechanism (9) and to instruct the placing in rotation of the electric assistance motor (10) in a direction corresponding to the shortest angular movement between the initial position and a locked position.

9. Steering lock device according to any one of Claims 1 to 8, **characterized in that** the control means (12) are provided to store the initial angular position of the steering column (4), that is to say the position at the instant of the detection of the trigger event, a position which is supplied by an absolute or relative angle sensor, before the beginning of the operation of the steering column (4) by the electric assistance motor (10) towards the locked position, and to again instruct the electric assistance motor (10), after neutralization of the locking mechanism (9), in order to operate the steering column (4) in the inverse direction, and thus return this steering column (4) to the initial angular position.

10. Steering lock device according to any one of Claims 1 to 9, **characterized in that** the control means, intervening to operate the electric assistance motor (10) while receiving and while processing the signals (S1, S2, S3) from the detectors of trigger events and of states of the vehicle, and from the torque sensor (13), consist of an electronic computer (12).
